(19) Europäisches Patentamt
European Patent Office
Office européen des brevets

(11) EP 4 464 741 A1

(12) EUROPEAN PATENT APPLICATION
published in accordance with Art. 153(4) EPC

(43) Date of publication:
**20.11.2024 Bulletin 2024/47**

(21) Application number: **22920677.6**

(22) Date of filing: **28.12.2022**

(51) International Patent Classification (IPC):
***C08L 23/08*** (2006.01) ***C08K 5/053*** (2006.01)
***C08K 5/17*** (2006.01) ***C08K 5/37*** (2006.01)
***C08L 25/08*** (2006.01) ***C08L 35/00*** (2006.01)
***C08L 35/02*** (2006.01)

(52) Cooperative Patent Classification (CPC):
**C08K 5/00; C08K 5/053; C08K 5/17; C08K 5/37; C08L 23/08; C08L 23/20; C08L 25/08; C08L 35/00; C08L 35/02**

(86) International application number:
**PCT/JP2022/048503**

(87) International publication number:
**WO 2023/136162 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 JP 2022004485**

(71) Applicant: **ENEOS Materials Corporation**
**Tokyo 105-7109 (JP)**

(72) Inventor: **CHINO Keisuke**
**Tokyo 100-8162 (JP)**

(74) Representative: **Müller-Boré & Partner Patentanwälte PartG mbB**
**Friedenheimer Brücke 21**
**80639 München (DE)**

# (54) POLYMER COMPOSITION

(57) A polymer composition comprising: at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking moiety and a covalent-bonding cross-linking moiety in a side chain and having a glass transition point of 25°C or lower, wherein both the polymer (A) and the polymer (B) are a reaction product of a specific copolymer (X) with a cross-linking agent.

EP 4 464 741 A1

## Description

[Technical Field]

The present invention relates to a polymer composition.

[Background Art]

Conventionally, various polymer compositions have been studied in order to exhibit characteristics according to the application. For example, International Publication No. WO2020/027109 (PTL 1) discloses a resin composition comprising: at least one resin ingredient selected from the group consisting of a resin (A) having a side chain (a) containing a hydrogen-bonding cross-linking moiety with a carbonyl-containing group and/or a nitrogen-containing heterocycle and having a glass transition point of 25°C or lower, and a resin (B) containing a hydrogen-bonding cross-linking moiety and a covalent-bonding cross-linking moiety in a side chain and having a glass transition point of 25°C or lower, wherein both the resin (A) and the resin (B) are a reaction product of a cross-linking agent with a maleic anhydride-modified thermoplastic resin having a melting point of 68°C to 134°C and a maleation rate of 0.5 to 2.5% by mass. Such a resin composition described in PTL 1 makes it possible to achieve both of the two characteristics, resistance to compression set and fluidity, as sufficiently good ones.

In addition, Japanese Unexamined Patent Application Publication No. 2021-172765 (PTL 2) discloses a polymer composition comprising: at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking moiety and a covalent-bonding cross-linking moiety in a side chain and having a glass transition point of 25°C or lower, wherein both the polymer (A) and the polymer (B) are a reaction product of a cross-linking agent with a maleic anhydride graft-modified thermoplastic polymer having a melting point of 64°C or lower and a maleation rate of 0.1 to 3.0% by mass, and a type A durometer hardness measured under a temperature condition of 20 $\pm$ 5°C according to JIS K6253-3: 2012 is 0 to 49. The resin composition described in PTL 2 makes it possible to achieve both of the two characteristics, low hardness and resistance to compression set, as sufficiently good ones.

[Citation List]

[Patent Literature]

[PTL 1] International Publication No. WO2020/027109
[PTL 2] Japanese Unexamined Patent Application Publication No. 2021-172765

[Summary of Invention]

[Technical Problem]

However, even in the compositions described in PTLs 1 and 2, there is room for improvement in terms of achieving sufficiently low values of the hardness and compression set while achieving an extremely high fluidity. Note that it is generally known that polymers with high fluidity (large MFR value) tend to have a high hardness as well as a high compression set. As above, in the field of polymer compositions, it is known that fluidity and the characteristics of hardness and compression set are in a trade-off relationship where when one improves, the other decreases; therefore, the advent of a polymer composition having these characteristics at a sufficiently high level and in a well-balanced manner (a polymer composition having high fluidity, low hardness, and low compression set at the same time) has conventionally been desired.

The present invention has been made in view of the above problem of the related art, and an object thereof is to provide a polymer composition that can achieve sufficiently low values of the hardness and compression set while achieving an extremely high fluidity, and can achieve three characteristics of high fluidity, low hardness, and low compression set in a well-balanced manner.

[Solution to Problem]

The present inventors have conducted extensive studies to achieve the above-mentioned object, and have found

as a result that when a polymer composition contains at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking moiety and a covalent-bonding cross-linking moiety in a side chain and having a glass transition point of 25°C or lower, wherein both the polymer (A) and the polymer (B) are a reaction product of copolymer (X) that has a structural unit (I) derived from an olefin and a structural unit (II) derived from maleic anhydride in a main chain and has a maleation rate of 0.1% by mass or more and 2.7% by mass or less with a cross-linking agent, it becomes possible to achieve sufficiently low values of the hardness and compression set of the composition while achieving an extremely high fluidity of the composition, and the composition can achieve three characteristics of high fluidity, low hardness, and low compression set in a well-balanced manner. Thus, the present invention has been completed.

Specifically, the present invention provides the following aspects.

[1] A polymer composition comprising:

at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking moiety and a covalent-bonding cross-linking moiety in a side chain and having a glass transition point of 25°C or lower, wherein

both the polymer (A) and the polymer (B) are a reaction product of a copolymer (X) that has a structural unit (I) derived from an olefin and a structural unit (II) derived from maleic anhydride in a main chain and has a maleation rate of 0.1% by mass or more and 2.7% by mass or less with a cross-linking agent.

[2] The polymer composition according to [1], wherein the copolymer (X) further includes a structural unit (III) derived from a (meth)acrylic ester in the main chain.

[3] The polymer composition according to [2], wherein a content of the structural unit (III) in the copolymer (X) is 1% by mass or more and 50% by mass or less.

[4] The polymer composition according to [2], wherein a content of the structural unit (III) in the copolymer (X) is 25% by mass or more and 40% by mass or less.

[5] The polymer composition according to any one of [2] to [4], wherein the structural unit (III) includes a structural unit (III-MA) derived from methyl (meth)acrylate.

[6] The polymer composition according to any one of [1] to [5], wherein the copolymer (X) is a polymer having a melting point of 120°C or lower.

[7] The polymer composition according to any one of [1] to [6], wherein the cross-linking agent is a compound having at least one of a hydroxyl group, an amino group, an imino group, and a thiol group.

[8] The polymer composition according to any one of [1] to [7], further comprising: a styrene block copolymer having no chemically bondable cross-linking moiety.

[9] The polymer composition according to any one of [1] to [8], further comprising: at least one plasticizer selected from the group consisting of process oils, polybutenes having no chemically bondable cross-linking moiety, and polyisobutylenes having no chemically bondable cross-linking moiety.

[Advantageous Effects of Invention]

The present invention makes it possible to provide a polymer composition that can achieve sufficiently low values of the hardness and compression set while achieving an extremely high fluidity, and can achieve three characteristics of high fluidity, low hardness, and low compression set in a well-balanced manner.

[Description of Embodiments]

Hereinafter, the present invention will be described in detail based on preferred embodiments thereof. In the present specification, unless otherwise specified, the notation "X to Y" for numerical values X and Y means "X or more and Y or less." In such a notation, if a unit is attached only to the numerical value Y, the unit shall also be applied to the numerical value X.

A polymer composition of the present invention comprises:

at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking

moiety and a covalent-bonding cross-linking moiety in a side chain and having a glass transition point of 25°C or lower, wherein

both the polymer (A) and the polymer (B) are a reaction product of a copolymer (X) that has a structural unit (I) derived from an olefin and a structural unit (II) derived from maleic anhydride in a main chain and has a maleation rate of 0.1% by mass or more and 2.7% by mass or less with a cross-linking agent.

In the polymers (A) and (B), the "side chain" refers to the side chain and the end of the polymer. In addition, the "side chain (a) containing a hydrogen-bonding cross-linking moiety with a carbonyl-containing group and/or a nitrogen-containing heterocycle" means that the carbonyl-containing group and/or the nitrogen-containing heterocycle (more preferably the carbonyl-containing group and the nitrogen-containing heterocycle) as a hydrogen-bonding cross-linking moiety has a chemically stable bond (covalent bond) to the atom (usually a carbon atom) forming the main chain of the polymer. In addition, "containing a hydrogen-bonding cross-linking moiety and a covalent-bonding cross-linking moiety in a side chain" is a concept including the case of containing both the hydrogen-bonding cross-linking moiety and the covalent-bonding cross-linking moiety in the side chain of the polymer by containing both side chains of a side chain having the hydrogen-bonding cross-linking moiety (hereinafter sometimes referred to as "side chain (a')" for convenience) and a side chain having the covalent-bonding cross-linking moiety (hereinafter sometimes referred to as "side chain (b)" for convenience) as well as the case of containing both the hydrogen-bonding cross-linking moiety and the covalent-bonding cross-linking moiety in the side chain of the polymer by containing a side chain having both the hydrogen-bonding cross-linking moiety and the covalent-bonding cross-linking moiety (side chain containing both the hydrogen-bonding cross-linking moiety and the covalent-bonding cross-linking moiety in one side chain: hereinafter, such a side chain is sometimes referred to as "side chains (c)" for convenience).

From the viewpoint of the possibility of further lowering the hardness, the polymer ingredient is more preferably at least one selected from the group consisting of a polymer (B) containing a hydrogen-bonding cross-linking moiety and a covalent-bonding cross-linking moiety in a side chain and having a glass transition point of 25°C or lower. In such polymer ingredients, the main chains of the polymers (A) and (B) are derived from the main chain of the copolymer (X), since the polymers (A) and (B) are the reaction product of the copolymer (X) and a cross-linking agent. Note that the copolymer (X) will be described later.

In addition, the glass transition points of the polymers (A) and (B) are all 25°C or lower as described above. In the present invention, the "glass transition point" is a glass transition point measured by differential scanning calorimetry (DSC). Note that, in the measurement, the rate of temperature rise is set to 10°C/min to carry out measurement. By setting the glass transition point of the polymer to 25°C or lower, it is possible to impart flexibility in a normal operating temperature range (room temperature (25°C) or higher).

In addition, as described above, the polymers (A) and (B) have as a side chain at least one of a side chain (a) containing a hydrogen-bonding cross-linking moiety with a carbonyl-containing group and/or a nitrogen-containing heterocycle; a side chain (a') containing a hydrogen-bonding cross-linking moiety and a side chain (b) containing a covalent-bonding cross-linking moiety; and a side chain (c) containing a hydrogen-bonding cross-linking moiety and a covalent-bonding cross-linking moiety. Note that in the present invention, it can be said that the side chain (c) is a side chain that also functions as the side chain (b) while also functioning as the side chain (a'). Each side chain is described later.

<Side Chain (a'): Side Chain Containing Hydrogen-Bonding Cross-Linking Moiety>

The side chain (a') containing a hydrogen-bonding cross-linking moiety may be a side chain that has a group capable of forming a hydrogen bond-based cross-link (such as a hydroxyl group or a hydrogen-bonding cross-linking moiety contained in the side chain (a) described later), and forms a hydrogen bond based on the group, and the structure thereof is not particularly limited. Here, the hydrogen-bonding cross-linking moiety is a moiety that cross-links the molecules of the polymer by hydrogen bonding. Note that cross-links by hydrogen bonding are formed only when there is a hydrogen acceptor (such as a group containing an atom containing a lone electron pair) and a hydrogen donor (such as a group having a hydrogen atom covalently bonded to an atom with high electronegativity). For this reason, in the absence of both hydrogen acceptor and hydrogen donor between the side chains of the polymer molecules, a cross-link by hydrogen bonding is not formed. Therefore, a hydrogen-bonding cross-linking moiety exists in the system only when both a hydrogen acceptor and a hydrogen donor are present between the side chains of the polymer molecules. Note that, in the present invention, the portion of the side chain that can function as a hydrogen acceptor and the portion that can function as a donor can be determined as a hydrogen-bonding cross-linking moiety based on the presence of both a portion capable of functioning as a hydrogen acceptor (such as a carbonyl group) and a portion capable of functioning as a hydrogen donor (such as a hydroxyl group) between the side chains of the polymer molecules.

As the hydrogen-bonding cross-linking moiety in the side chain (a'), the side chain (a) described later is more preferable from the viewpoint of forming a stronger hydrogen bond. In addition, from the same viewpoint, the hydrogen-bonding cross-linking moiety in the side chain (a') is more preferably a hydrogen-bonding cross-linking moiety having a

carbonyl-containing group and a nitrogen-containing heterocycle.

<Side Chain (a): Side Chain Containing Hydrogen-Bonding Cross-Linking Moiety with Carbonyl-Containing Group and/or Nitrogen-Containing Heterocycle>

The side chain (a) containing a hydrogen-bonding cross-linking moiety with a carbonyl-containing group and/or a nitrogen-containing heterocycle may be one that has a carbonyl-containing group and/or a nitrogen-containing heterocycle, and other configurations are not particularly limited. As the hydrogen-bonding cross-linking moiety, those having a carbonyl-containing group and a nitrogen-containing heterocycle are more preferable.

The carbonyl-containing group may be one that contains a carbonyl group, and is not particularly limited, and specific examples thereof include amides, esters, imides, carboxy groups, carbonyl groups, thioester groups, and acid anhydride groups. Note that, in the present invention, both the polymers (A) and (B) are a reaction product of the copolymer (X) with a cross-linking agent, and thus the "maleic anhydride group" contained in the main chain portion of the copolymer (X) reacts with the cross-linking agent to form a side chain, so that the side chain formed in the reaction product has at least a group derived from a "maleic anhydride group" (such as an ester group, a carbonyl group, an amide group, an imide group, a carboxy group, an acid anhydride group, and the like, although it depends on the type and the like of the cross-linking agent reacted).

In addition, when the side chain (a) has a nitrogen-containing heterocycle, the nitrogen-containing heterocycle may be introduced into the side chain (a) directly or via an organic group, and its configuration or the like is not particularly limited. As the nitrogen-containing heterocycle, as long as the heterocycle contains a nitrogen atom, it is possible to use one whose heterocycle has a hetero atom other than a nitrogen atom, for example, a sulfur atom, an oxygen atom, a phosphorus atom, or the like. Note that the nitrogen-containing heterocycle may have a substituent. Here, using a nitrogen-containing heterocycle in the side chain (a) is preferable because the hydrogen bond forming a cross-link becomes stronger due to the heterocyclic structure, and the stretchability and impact resistance of the polymer composition are further improved. In addition, the nitrogen-containing heterocycle is preferably a 5-membered ring and/or a 6-membered ring from the viewpoint that the hydrogen bond becomes stronger, and the resistance to compression set and the mechanical strength are further improved. In addition, as the nitrogen-containing heterocycle, a nitrogen-containing heterocycle may be condensed with a benzene ring, or nitrogen-containing heterocycles may be condensed with each other. As the nitrogen-containing heterocycle, it is possible to appropriately use known ones (such as one described in paragraphs [0054] to [0067] of Japanese Patent No. 5918878, and one described in paragraphs [0035] to

**[0021]** of Japanese Unexamined Patent Application Publication No. 2017-206604). Note that the nitrogen-containing heterocycle may have a substituent.

Examples of the nitrogen-containing heterocycle include pyrrolidone, oxindole (2-oxyindole), indoxyl (3-oxyindole), dioxyindole, isatin, phthalimidine, β-isoindigo, porphyrin, azaporphyrin, phthalocyanine, hemoglobin, uroporphyrin, chlorophyll, phycoerythrin, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, benzoxazole, benzoisoxazole, anthranil, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, hydroxyethyl isocyanurate, and derivatives thereof.

From the viewpoint of good recyclability, compression set, ease of adjusting hardness, and mechanical strength (especially tensile strength), the nitrogen-containing heterocycle is preferably at least one selected from a triazole ring, an isocyanurate ring, a thiadiazole ring, a pyridine ring, an imidazole ring, a triazine ring, and a hydantoin ring, each of which may have a substituent, and preferably at least one selected from a triazole ring, a thiadiazole ring, a pyridine ring, an imidazole ring, and a hydantoin ring, each of which may have a substituent.

Examples of the substituent that the nitrogen-containing heterocycle may have include a hydroxyl group, an amino group, an imino group, a carboxy group, an isocyanate group, an epoxy group, an alkoxysilyl group, and a thiol group (mercapto group). In addition, as the substituent, it is possible to use an alkyl group such as a methyl group, an ethyl group, an (iso)propyl group, or a hexyl group; an alkoxy group such as a methoxy group, an ethoxy group, or an (iso) propoxy group; a group made up of a halogen atom such as a fluorine atom, a chlorine atom, a bromine atom, or an iodine atom; a cyano group; an amino group; an imino group; an aromatic hydrocarbon group; an ester group; an ether group; an acyl group; a thioether group; or the like. In addition, the substitution positions of these substituents are not particularly limited, and the number of substituents is not limited either.

In addition, when both the carbonyl-containing group and the nitrogen-containing heterocycle are contained in the side chain (a), the carbonyl-containing group and the nitrogen-containing heterocycle may be introduced into the main chain as side chains independent of each other, but are preferably introduced into the main chain as one side chain in which

the carbonyl-containing group and the nitrogen-containing heterocycle are bonded via different groups. The structure of the side chain (a) may be, for example, a structure as described in paragraphs [0068] to [0081] of JP 5918878 B.

In addition, the side chain (a) is basically formed by a reaction between a maleic anhydride group of the structural unit (II) contained in the main chain of the copolymer (X) and a cross-linking agent. For this reason, as a cross-linking agent used when forming the side chain (a), it is possible to preferably use a compound capable of reacting with a maleic anhydride group to form a hydrogen-bonding cross-linking moiety (hereinafter simply referred to as a "compound that forms a hydrogen-bonding cross-linking moiety" in some cases) . As the "compound that forms a hydrogen-bonding cross-linking moiety" which can be used as a cross-linking agent, it is possible to preferably use a compound capable of introducing a nitrogen-containing heterocycle. For example, the "compound that forms a hydrogen-bonding cross-linking moiety (more preferably a compound capable of introducing a nitrogen-containing heterocycle)" is preferably a compound having a substituent that reacts with a maleic anhydride group (such as a hydroxyl group, a thiol group, an amino group, or an imino group), and more preferably a compound having at least one of a hydroxyl group, an amino group, an imino group, and a thiol group. In addition, the compound particularly preferably has a nitrogen-containing heterocycle.

<Side Chain (b) : Side Chain Containing Covalent-Bonding Cross-Linking Moiety>

In the present specification, the "side chain (b) containing a covalent-bonding cross-linking moiety" means a side chain containing a portion in which the molecules of the polymer forming the main chain are cross-linked by covalent bonds (covalent-bonding cross-linking moiety: for example, a portion that can be formed by reacting a maleic anhydride group with a cross-linking agent and that cross-links polymers by a chemically stable bond (covalent bond) such as at least one bond selected from the group consisting of amides, esters, and thioesters). Note that the side chain (b) is a side chain containing a covalent-bonding cross-linking moiety, but is used as the side chain (c) described later when it has a covalent bond moiety and also has a group capable of hydrogen bonding to form a cross-link by hydrogen bonding between side chains (note that, in the absence of both a hydrogen donor and a hydrogen acceptor capable of forming a hydrogen bond between the side chains of the polymer molecules, for example in the presence of only a side chain containing ester groups (-COO-) in the system, no hydrogen bond is particularly formed between the ester groups (-COO-), and thus the groups do not function as a hydrogen-bonding cross-linking moiety. On the other hand, when a structure, having both a hydrogen acceptor portion and a hydrogen donor portion for hydrogen bond such as a carboxy group and a triazole ring, is contained in the side chains of the polymer molecules, hydrogen bonds are formed between the side chains of the polymer molecules, and thus a hydrogen-bonding cross-linking moiety is contained. In addition, for example, when an ester group and a hydroxyl group coexist between the side chains of the polymer molecules, and these groups contribute to the formation of a hydrogen bond between the side chains, the portion where the hydrogen bond is formed becomes the hydrogen-bonding cross-linking moiety. Therefore, it may be used as the side chain (c) depending on the structure itself of the side chain (b), the type of the structure of the side chain (b) and the substituents of the other side chains, and the like.). In addition, the "covalent-bonding cross-linking moiety" mentioned here is a portion that cross-links polymer molecules by covalent bonding.

The side chain (b) containing a covalent-bonding cross-linking moiety is not particularly limited, but is preferably, for example, a side chain containing a covalent-bonding cross-linking moiety which is formed by reacting the polymer (X); and a cross-linking agent comprising a compound capable of reacting with a maleic anhydride group (functional group) to form a covalent-bonding cross-linking moiety (hereinafter referred to as a "compound that forms a covalent-bonding cross-linking moiety" in some cases). The cross-linking of the side chain (b) at the covalent-bonding cross-linking moiety is preferably formed by at least one bond selected from the group consisting of amides, esters, and thioesters.

The "compound that forms a covalent-bonding cross-linking moiety" which can be used as the cross-linking agent is preferably a compound having a substituent that reacts with a maleic anhydride group (such as a hydroxyl group, a thiol group, an amino group, or an imino group), and more preferably a compound having at least one of a hydroxyl group, an amino group, and an imino group, and in addition, the compound is particularly preferably one that has a nitrogen-containing heterocycle.

In addition, examples of the "compound that forms a covalent-bonding cross-linking moiety" which can be used as the cross-linking agent include a polyamine compound having two or more amino groups and/or imino groups in one molecule (in the case of having both amino groups and imino groups, a total of two or more of these groups); a polyol compound having two or more hydroxyl groups in one molecule; a polyisocyanate compound having two or more isocyanate (NCO) groups in one molecule; and a polythiol compound having two or more thiol groups (mercapto groups) in one molecule. Here, the "compound that forms a covalent-bonding cross-linking moiety" can be a compound capable of introducing both the hydrogen-bonding cross-linking moiety and the covalent-bonding cross-linking moiety depending on the type of substituents of the compound, the degree of progress of the reaction when the reaction is carried out using the compound, and the like (for example, when a compound having three or more hydroxyl groups is used as a cross-linking agent to form a cross-linking moiety by a covalent bond, there may be a case where two hydroxyl groups react with the maleic anhydride group in the main chain of the copolymer (X), and the remaining one hydroxyl group remains as a

hydroxyl group depending on the degree of progress of the reaction, and in that case, a moiety that forms a hydrogen-bonding cross-link can also be introduced). Therefore, the "compound that forms a covalent-bonding cross-linking moiety" exemplified here may also include a "compound that forms both a hydrogen-bonding cross-linking moiety and a covalent-bonding cross-linking moiety." From this viewpoint, in the case of forming the side chain (b), the side chain (b) may be formed by appropriately selecting a compound from the "compound that forms a covalent-bonding cross-linking moiety" according to the desired design, appropriately controlling the degree of reaction progress, and the like. Note that when the compound that forms a covalent-bonding cross-linking moiety has a heterocycle, it is possible to more efficiently produce a hydrogen-bonding cross-linking moiety at the same time, and efficiently form a side chain having the covalent-bonding cross-linking moiety as the side chain (c) described later. Therefore, a specific example of a compound having such a heterocycle is described as a suitable compound for producing the side chain (c), particularly together with the side chain (c). Note that it can be said the side chain (c) is a preferable form of the side chain such as the side chain (a) and the side chain (b) because of its structure.

As the polyamine compound, the polyol compound, the polyisocyanate compound, and the polythiol compound that can be used as the "compound that forms a covalent-bonding cross-linking moiety," it is possible to appropriately use known ones (for example, those described in paragraphs [0094] to [0106] of JP 5918878 B) .

<Side Chain (c): Side Chain Containing Both Hydrogen-Bonding Cross-Linking Moiety and Covalent-Bonding Cross-Linking Moiety>

The side chain (c) is a side chain containing both a hydrogen-bonding cross-linking moiety and a covalent-bonding cross-linking moiety in one side chain. The hydrogen-bonding cross-linking moiety contained in the side chain (c) is the same as the hydrogen-bonding cross-linking moiety described in the side chain (a'), and is preferably the same as the hydrogen-bonding cross-linking moiety in the side chain (a) . In addition, as the covalent-bonding cross-linking moiety contained in the side chain (c), one same as the covalent-bonding cross-linking moiety in the side chain (b) can be used (this is the case for a suitable cross-linking thereof).

The side chain (c) is preferably a side chain formed when the copolymer (X) is reacted with a cross-linking agent comprising a compound that forms both a hydrogen-bonding cross-linking moiety and a covalent-bonding cross-linking moiety (compound that introduces both a hydrogen-bonding cross-linking moiety and a covalent-bonding cross-linking moiety) on reaction with a maleic anhydride group in the main chain of the copolymer (X).

The "compound that forms both a hydrogen-bonding cross-linking moiety and a covalent-bonding cross-linking moiety (compound that introduces both a hydrogen-bonding cross-linking moiety and a covalent-bonding cross-linking moiety)" that can be used as the cross-linking agent is preferably a compound having a substituent that reacts with a maleic anhydride group (such as a hydroxyl group, a thiol group, an amino group, or an imino group), and more preferably a compound having at least one of a hydroxyl group, an amino group, an imino group, and a thiol group. In addition, the compound that forms both a hydrogen-bonding cross-linking moiety and a covalent-bonding cross-linking moiety (compound that introduces both a hydrogen-bonding cross-linking moiety and a covalent-bonding cross-linking moiety) is preferably a compound having a heterocycle (particularly preferably a nitrogen-containing heterocycle) and capable of forming a covalent-bonding cross-linking moiety, and among others, heterocyclic polyols, heterocyclic polyamines, heterocyclic polythiols, and the like are more preferable. Note that, as the polyol, polyamine, or polythiol containing a heterocycle, it is possible to appropriately use one same as the polyol compound, the polyamine compound, or the polythiol compound described above except that a heterocycle (particularly a nitrogen-containing heterocycle) is contained. In addition, as polyols, polyamines, and polythiols containing a heterocycle, it is possible to appropriately use known ones (for example, ones described in paragraph [0113] of JP 5918878 B).

(Regarding Structure Suitable as Covalent-Bonding Cross-Linking Moiety in Side Chains (b) and (c))

Regarding the side chain' (b) and/or (c), it is preferable that the cross-linking at the covalent-bonding cross-linking moiety contains a tertiary amino bond (-N=) and an ester bond (-COO-), and these bonding sites also function as hydrogen-bonding cross-linking moieties, from the viewpoint that the cross-linking is stronger by hydrogen bonding with other hydrogen bond cross-linking moieties. As described above, when a tertiary amino bond (-N=) or an ester bond (-COO-) in a side chain having a covalent-bonding cross-linking moiety forms a hydrogen bond with another side chain, the covalent-bonding cross-linking moiety containing the tertiary amino bond (-N=) and the ester bond (-COO-) also includes a hydrogen-bonding cross-linking moiety, and can function as a side chain (c).

Preferable examples of the compound capable of forming a covalent-bonding cross-linking moiety containing the tertiary amino bond and/or the ester bond by reacting with a maleic anhydride group in the copolymer (X) (compound capable of forming both a hydrogen-bonding cross-linking moiety and a covalent-bonding cross-linking moiety: a type of cross-linking agent) can include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine) .

The cross-link of the side chain (b) and/or the side chain (c) at the covalent-bonding cross-linking moiety may be of the same structure described in paragraphs [0100] to [0109] of JP 2017-206604 A, for example. For instance, as the cross-link of the side chain (b) and/or the side chain (c) at the covalent-bonding cross-linking moiety, it is possible to appropriately use one containing at least one structure represented by any of the following general formulas (1) to (3) (note that, in the following structure, when a hydrogen-bonding cross-linking moiety is included, the side chain having that structure is used as the side chain (c)).

[Chem. 1]

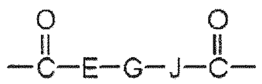
(1)

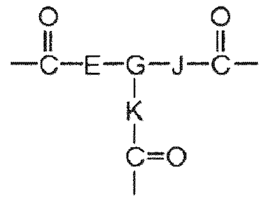
(2)

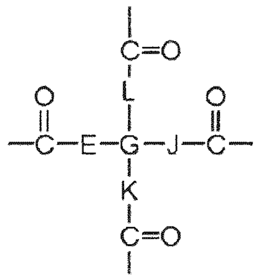
(3)

In the above general formulas (1) to (3), E, J, K, and L are each independently a single bond; an oxygen atom, an amino group NR'(R' is a hydrogen atom or an alkyl group having 1 to 10 carbon atoms), or a sulfur atom; or an organic group which may contain these atoms or groups, and G may contain an oxygen atom, a sulfur atom, or a nitrogen atom, and is a linear, branched, or cyclic hydrocarbon group having 1 to 20 carbon atoms. In addition, the substituent G is preferably groups represented by the following general formulas (111) to (114) .

[Chem. 2]

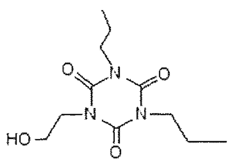
(111)

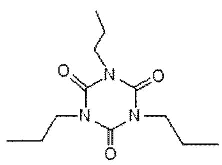
(112)

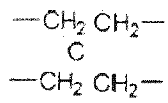
(113)

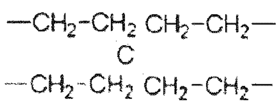
(114)

The side chain (a'), the side chain (a), the side chain (b), and the side chain (c) have been described above, and each group (structure) of the side chain in the polymer can be confirmed by a commonly used analytical means such as NMR and IR spectra.

In addition, the polymer (A) is a polymer having the side chain (a) and having a glass transition point of 25°C or lower, and the polymer (B) is a polymer containing a hydrogen-bonding cross-linking moiety and a covalent-bonding cross-linking moiety in the side chain and having a glass transition point of 25°C or lower (such as a polymer having both the side chain (a') and the side chain (b) as side chains, or a polymer containing the side chain (c) in the side chain). Then, as the polymer ingredient according to the present invention, one of the polymers (A) and (B) may be used alone, or two or more of them may be mixed and used.

Note that the polymer (B) may be a polymer having both the side chain (a') and the side chain (b), or a polymer having the side chain (c), and the hydrogen-bonding cross-linking moiety contained in the side chain of the polymer (B) is preferably a hydrogen-bonding cross-linking moiety having a carbonyl-containing group and/or a nitrogen-containing heterocycle (more preferably a hydrogen-bonding cross-linking moiety having a carbonyl-containing group and a nitrogen-containing heterocycle) from the viewpoint that a stronger hydrogen bond is formed. In addition, the cross-link at the covalent-bonding cross-linking moiety contained in the side chain of the polymer (B) is preferably formed by at least one bond selected from the group consisting of amides, esters, and thioesters from the viewpoint that it is possible to induce intermolecular interactions such as hydrogen bonds between the side chains including the cross-linking moiety.

<Copolymer (X)>

Copolymer (X) according to the present invention is a copolymer that has a structural unit (I) derived from an olefin and a structural unit (II) derived from maleic anhydride in a main chain and has a maleation rate of 0.1% by mass or more and 2.7% by mass or less.

The structural unit (I) constituting the main chain of the copolymer (X) is a structural unit formed in the main chain of the polymer derived from the olefin used as a monomer. Such an olefin is not particularly limited, and examples thereof include ethylene, propylene, 1-butene, 1-pentene, 1-hexene, 1-heptene, 1-octene, 1-nonene, and 1-decene. Among such olefins, ethylene, propylene, 1-butene, and 1-octene are preferred, and ethylene is particularly preferred, since the copolymer (X) is more likely to react with a cross-linking agent.

Further, the structural unit (II) constituting the main chain of the copolymer (X) is a structural unit formed in the main chain of the polymer derived from maleic anhydride used as a monomer. Derived from such structural unit (II), copolymer (X) has maleic anhydride groups and has a specific maleation rate. The copolymer (X) according to the present invention is a polymer having a maleation rate of 0.1% by mass or more and 2.7% by mass or less. If the maleation rate is outside the above range, the cross-linking density cannot be maintained within an appropriate range, and the desired cross-linking effect cannot be obtained. In addition, the maleation rate is more preferably 0.1% by mass or more and 2.5% by mass or less (more preferably 0.2% by mass or more and 2.3% by mass or less, and particularly preferably 0.3% by mass or more and 2.0% by mass or less), since those ratios are more effective in terms of achieving lower compression set without causing a decrease in breaking strength. Note that in the present invention, the value (unit: % by mass) of the "maleation rate" is a value obtained by employing the following [Method for Measuring Maleation Rate].

[Method for Measuring Maleation Rate]

First, 400 mg of the polymer as the measurement target is dissolved in 80 mL of tetrahydrofuran (hereinafter sometimes abbreviated as "THF" for convenience) to obtain a THF solution for measurement. Next, the THF solution for measurement is titrated with an ethanol solution of 0.1 mol/L potassium hydroxide for which a factor having three or more decimal places has been obtained (standard solution for volumetric analysis: ethanol solution of 0.1 mol/L potassium hydroxide with correction: a commercially available one with a factor (characteristic value: corrected value) having three or more decimal places may be used). Here, the end point (neutralization point) is obtained by potentiometric titration using an instrument. In addition, the factor (characteristic value: corrected value) of the ethanol solution of 0.1 mol/L potassium hydroxide may be determined by titration with an oxalic acid standard solution, and in the case of using a commercially available product for which a factor has been obtained, the factor described on a commercially available reagent (for example, the factor described in the test report of that reagent) may be used as it is. Then, the same measurement is performed except for not using the polymer as the measurement target (blank test) to carry out titration and to also determine the amount (blank value) of an ethanol solution of 0.1 mol/L potassium hydroxide dropped to 80 mL of THF. Next, the acid value is calculated based on the following "Acid Value Calculation Formula" using the obtained titration value (amount dropped). Then, the obtained acid value is used to calculate the maleation rate based on the following "Maleation Rate Calculation Formula." As a result, the maleation rate (unit: % by mass) is obtained.

<Acid Value Calculation Formula>

$$[\text{Acid Value}] = (A - B) \times M_1 \times C \times f/S$$

(in the formula, A indicates the amount dropped of the ethanol solution of 0.1 mol/L potassium hydroxide required for neutralizing the solution for measurement (titration value: mL), B indicates the amount dropped of 0.1 mol/L potassium hydroxide in ethanol solution in a blank (blank test) (titration value (blank value: mL) obtained by performing the same measurement except for not using the polymer as the measurement target), $M_1$ indicates the molecular weight of potassium hydroxide (56.1 (constant)), C indicates the concentration of potassium hydroxide in the ethanol solution of potassium hydroxide (0.1 mol/L (constant)), f indicates the factor of the ethanol solution of potassium hydroxide (corrected value: the factor described on a commercially available reagent (for example, the factor described in the test report of a reagent) may be used as they are), S indicates the mass (400 mg (constant)) of the polymer used for the measurement. Note that the unit of "acid value" obtained by the above calculation is "mg KOH/g.")

<Maleation Rate Calculation Formula>

$$[\text{Maleation Rate}] = [\text{Acid Value}] \div M_1 \times M_2 \div 1000 \times 100 \div 2$$

(in the formula, the acid value indicates the value (unit: mg KOH/g) obtained by the above "Acid Value Calculation Formula," $M_1$ indicates the molecular weight of potassium hydroxide (56.1 (constant)), and $M_2$ indicates the molecular weight of maleic anhydride (98.1 (constant)). The unit of "maleation rate" obtained by the above calculation is "% by mass.").

Moreover, the copolymer (X) according to the present invention preferably further has a structural unit (III) derived from a (meth)acrylic acid ester in the main chain. Specifically, the copolymer (X) according to the present invention preferably utilizes a (meth)acrylic ester as a monomer and further comprises structural units formed in the main chain of the polymer derived from that (meth)acrylic ester. If the structural unit (III) derived from such a (meth)acrylic acid ester is further contained in the main chain, it becomes possible to inhibit the crystallization of the olefin phase (such as ethylene phase) derived from the structural unit (I), thereby making it possible to further reduce the hardness. Note that in the present specification, "(meth)acrylic ester" means acrylic ester and/or methacrylic ester.

Such (meth)acrylic esters are not particularly limited, and known ones can be used as appropriate; examples thereof include methyl (meth)acrylate, ethyl (meth)acrylate, propyl (meth)acrylate, butyl (meth)acrylate, isobutyl (meth) acrylate, tert-butyl (meth)acrylate, and 2-ethylhexyl (meth)acrylate. Moreover, as such a (meth)acrylic ester, methyl (meth)acrylate and ethyl (meth)acrylate are preferable, and among them, methyl (meth)acrylate is particularly preferable, from the viewpoint that steric hindrance is low and it is possible to further suppress the decrease in reactivity of the maleic anhydride skeleton.

Further, in the copolymer (X) according to the present invention, the content of the structural unit (I) is not particularly limited, but is preferably 20% by mass or more and 99% by mass or less (more preferably 30% by mass or more and 95% by mass or less) in the copolymer (X). When the content of such structural unit (I) is the lower limit or higher, the breaking strength tends to be higher. Meanwhile, in the case of the upper limit or lower, the hardness tends to decrease further and the value of the elongation at break tends to increase.

Furthermore, in the copolymer (X) according to the present invention, the content of the structural unit (II) is not particularly limited, but is preferably 0.1% by mass or more and 2.7% by mass or less (more preferably 0.2% by mass or more and 2.5% by mass or less) in the copolymer (X). When the content of such structural unit (II) is the lower limit or higher, the cross-linking density tends to be higher and the compression set tends to be lower. Meanwhile, in the case of the upper limit or lower, breaking strength and elongation at break tend to have larger values.

Further, when the copolymer (X) according to the present invention contains the structural unit (III), the content of the structural unit (III) is not particularly limited, but is preferably 0.1% by mass or more and 60% by mass or less (more preferably 1% by mass or more and 50% by mass or less, further more preferably 3% by mass or more and 45% by mass or less, and particularly preferably 25% by mass or more and 40% by mass or less) in the copolymer (X). When the content of such structural unit (I) is the lower limit or higher, it tends to inhibit crystallization and further reduce the hardness. Meanwhile, in the case of the upper limit or lower, breaking strength tends to be higher. Note that the content of the structural units (I) to (III) in the copolymer (X) can be determined by converting the molar ratio of the integral value of solution NMR into a weight ratio.

Further, in the copolymer (X) according to the present invention, the structural unit (III) more preferably includes a structural unit (III-MA) derived from methyl (meth)acrylate. In this way, if the structural unit (III-MA) derived from methyl (meth)acrylate is contained in the main chain, crystallization can be inhibited, and a higher effect can be obtained in terms of lowering the hardness, and since steric hindrance is low, a higher effect can be obtained in that the reaction of acid anhydride groups in the copolymer (X) is not inhibited. In addition, the content of the structural unit (III-MA) derived from methyl (meth)acrylate in the structural unit (III) is not particularly limited, but is preferably 30% by mass or more, further preferably 50 to 100% by mass, and particularly preferably 90 to 100% by mass, since higher effects can be obtained from the same viewpoint. Note that the structural unit (III) is most preferably composed only of the structural unit (III-MA) derived from methyl (meth)acrylate.

Further, the copolymer (X) is preferably a polymer having a melting point of 120°C or lower (more preferably -100°C or higher and 110°C or lower, further preferably - 80°C or higher and 100°C or lower). By using a polymer having a melting point within the above range, a higher effect in terms of further lowering the hardness tends to be obtained. Further, the "melting point" is a value measured by differential scanning calorimetry (DSC-Differential Scanning Calorimetry) at a temperature increase rate of 10°C/min.

Note that as the copolymer (X), a polymer (copolymer) of a monomer mixture containing an olefin and maleic anhydride can be suitably used; among these, a polymer (copolymer) of a monomer mixture of olefin, maleic anhydride, and (meth)acrylic acid ester is more preferable, a polymer (copolymer) of a monomer mixture of ethylene, maleic anhydride, and (meth)acrylic ester is more preferable, and a polymer (copolymer) of a monomer mixture of ethylene, maleic anhydride, and methyl (meth)acrylate is particularly preferable. Note that in the monomer mixture, the content of olefin is preferably 20% by mass or more and 99% by mass or less (more preferably 30% by mass or more and 95% by

mass or less), the content of maleic anhydride is preferably 0.1% by mass or more and 2.7% by mass or less (more preferably 0.2% by mass or more and 2.5% by mass or less), and the content of the (meth)acrylic ester is preferably 1% by mass or more and 60% by mass or less (more preferably 3% by mass or more and 50% by mass or less, and particularly preferably 25% by mass or more and 40% by mass or less).

Further, the method for producing such copolymer (X) is not particularly limited; apart from adjusting the types of raw materials and the amounts used thereof appropriately to satisfy the above conditions, production is easily possible by appropriately employing a known method capable of producing a polymer having a structural unit derived from an olefin and a structural unit derived from maleic anhydride in the main chain (such as the methods described in Japanese Unexamined Patent Application Publication No. Hei 1-156309, Japanese Unexamined Patent Application Publication No. Hei 3-163109, and Japanese Unexamined Patent Application Publication No. Sho 61-47711). Further, such a copolymer (X) may be a commercially available product as long as it satisfies the above conditions.

A suitable method for producing such a copolymer (X), when the copolymer (X) contains the structural units (I) to (III), may be a method that involves radical polymerization of an olefin (more preferably ethylene), maleic anhydride, and (meth)acrylic acid ester to obtain copolymer (X). In such a method, it is also possible to use phenolic antioxidants along with the monomers during radical polymerization; in this case, before the radical polymerization, a mixture (monomer mixture) containing an olefin (more preferably ethylene), maleic anhydride, (meth)acrylic acid ester, and phenolic antioxidants can be prepared, and this mixture can be used to conduct polymerization. Phenolic antioxidants that can be used include known compounds (such as phenolic antioxidants described in JP 1-156309 A), without particular limitation; for instance, 3,5-xylenol, 2,6-di-tert-butyl-4-methylphenol, and the like can be exemplified. Furthermore, the method for preparing the monomer mixture and the method for adding phenolic antioxidants are not particularly limited, and known methods (such as methods described in JP 1-156309 A) can be appropriately adopted. Additionally, during the radical polymerization, it is preferable to use so-called free radical polymerization initiators and to proceed with the polymerization in the presence of such free radical polymerization initiators. Free radical polymerization initiators that can be used include known compounds (such as compounds described in JP 1-156309 A), without particular limitation; for example, di-tert-butyl peroxide, di-tert-butyl peroxy pivalate, and the like can be mentioned. Moreover, the method for adding free radical polymerization initiators is not particularly limited, and known methods (such as methods described in JP 1-156309 A) can be appropriately adopted. Furthermore, during the radical polymerization, it is preferable to conduct the polymerization under conditions of pressure: 50 to 500 MPa (more preferably 100 to 300 MPa) and temperature: 80 to 350°C (more preferably 100 to 300°C) .

<Cross-linking Agent>

The cross-linking agent according to the present invention may be any compound capable of reacting with the maleic anhydride groups in the aforementioned copolymer (X) to form either polymer (A) or (B), without particular limitation; depending on the desired design, a compound that can react with the maleic anhydride groups to form various cross-linking moieties (a compound capable of forming the desired side chains) may be appropriately selected and used.

As such a cross-linking agent, it is possible to appropriately use the above-mentioned "compound that forms a hydrogen-bonding cross-linking moiety" or "compound that forms a covalent-bonding cross-linking moiety." In addition, as such a cross-linking agent, a compound having at least one of a hydroxyl group, an amino group, an imino group, and a thiol group is preferable from the viewpoint that the reaction proceeds efficiently. In addition, the compound having at least one of a hydroxyl group, an amino group, an imino group, and a thiol group is more preferably a compound having a nitrogen-containing heterocycle (the nitrogen-containing heterocycle is more preferably at least one selected from a triazole ring, an isocyanurate ring, a thiadiazole ring, a pyridine ring, an imidazole ring, a triazine ring, and a hydantoin ring) (note that the "nitrogen-containing heterocycle" mentioned here is the same as that described above).

Examples of the compound having at least one of a hydroxyl group, an amino group, an imino group, and a thiol group include tris(2-hydroxyethyl)isocyanurate (abbreviation: THI), 2,4-diamino-6-phenyl-1,3,5-triazine (benzoguanamine), 2,4-diamino-6-methyl-1,3,5-triazine (acetoguanamine), 3-amino-1,2,4-triazole, aminopyridine (2-, 3-, 4-), 3-amino-5-methylisoxazole, 2-aminomethylpiperidine, 1-(2-hydroxyethyl)imidazole, 2-butyl-5-hydroxymethylimidazole, 1,3-dihydro-1-phenyl-2H-benzimidazole-2-thione, chelidamic acid, kojic acid, 2,5-dimercapto-1,3,4-thiadiazole, 1-phenyl-5-mercapto-1,2,3,4-tetrazole, 1-methyl-5-mercapto-1,2,3,4-tetrazole, tris hydroxyethyl triazine, tris-[(3-mercaptopropionyloxy)-ethyl]-isocyanurate, hydroxypyridine (2-, 3-, 4-), 1-hydroxybenzotriazole, 1-(2-aminoethyl)piperazine, bis(aminopropyl)piperazine, piperidine ethanol (2-, 3-, 4-), piperidine methanol (2-, 3-, 4-), pyridine ethanol (2-, 3-, 4-), pyridine methanol (2-, 3-, 4-), 4-methyl-5-(2'-hydroxyethyl)thiazole, 1-methylol-5,5-dimethylhydantoin, melamine, and mercaptopyridine (2-, 3-, 4-). Such compounds may be used alone or in admixture of two or more.

In addition, from the viewpoint of high reactivity and industrial availability, the cross-linking agent is preferably at least one compound selected from the group consisting of nitrogen-containing compounds which may have at least one substituent from a hydroxyl group, a thiol group, an amino group, and an imino group (this substituent is hereinafter simply referred to as "substituent (A)" in some cases), oxygen-containing compounds which may have the substituent (A), and

sulfur-containing compounds which may have the substituent (A). Note that the "compound that forms a hydrogen-bonding cross-linking moiety" and "compound that forms a covalent-bonding cross-linking moiety" can be appropriately selected from known compounds (compounds described in Japanese Unexamined Patent Application Publication No. 2017-57322 and JP 5918878 B) and used as long as they can react with a maleic anhydride group.

In addition, the cross-linking agent is preferably at least one selected from the group consisting of triazoles which may have the substituent (A); pyridines which may have the substituent (A); thiadiazoles which may have the substituent (A); imidazoles which may have the substituent (A); isocyanurates which may have the substituent (A); triazines which may have the substituent (A); hydantoins which may have the substituent (A); pentaerythritol; sulfamide; and polyether polyols.

Such a cross-linking agent is preferably THI, sulfamide, pentaerythritol, benzoguanamine, acetoguanamine, and polyether polyol, and further preferably THI, pentaerythritol, benzoguanamine, and acetoguanamine, from the viewpoint of resistance to compression set.

<Method for Obtaining Reaction Product of Polymer (X) and Cross-Linking Agent>

The method for obtaining a reaction product of the copolymer (X) and the cross-linking agent is not particularly limited, and may be a method capable of forming the polymers (A) and (B) by reacting a maleic anhydride group in the main chain of the copolymer (X) with a functional group in a cross-linking agent (may be a method capable of forming the cross-linking moiety described in the polymers (A) and (B)), and the reaction may be appropriately carried out according to the type of the cross-linking agent and the like. For example, one may employ a method in which a cross-linking agent is added and reacted while kneading the copolymer (X) using a kneading machine such as a kneader at a temperature at which the copolymer (X) can be plasticized and the cross-linking agent to be added can be reacted with the maleic anhydride group (for example, about 100 to 250°C) .

<Regarding Composition and Characteristics of Polymer Composition>

The polymer composition of the present invention contains at least one polymer ingredient selected from the group consisting of the polymer (A) and the polymer (B). Herein, both the polymer (A) and the polymer (B) are a reaction product of copolymer (X) that has a structural unit (I) derived from an olefin and a structural unit (II) derived from maleic anhydride in a main chain and has a maleation rate of 0.1% by mass or more and 2.7% by mass or less with a cross-linking agent.

The polymer composition of the present invention may contain additional ingredients other than the polymer ingredients from the viewpoint of imparting characteristics according to the intended use, as long as the effects of the present invention are not impaired. When such an additional ingredient is contained, the content of the polymer ingredients in the polymer composition of the present invention is preferably 0.1% by mass or more, more preferably 1% by mass to 99% by mass, further preferably 3% by mass to 95% by mass, and particularly preferably 5% by mass to 90% by mass. When the content of the polymer ingredients in such a polymer composition is the above lower limit or higher, the effect obtained based on the polymer ingredients tends to be higher. Meanwhile, in the case of the upper limit or lower, mixing tends to be easier.

In addition, the polymer composition of the present invention preferably contains a plasticizer as the additional ingredient from the viewpoint that the fluidity of the composition can be further improved and the workability during use becomes higher. The plasticizer is not particularly limited, and known ones can be appropriately used. Examples thereof include process oils, polybutene having no chemically bondable cross-linking moiety (more preferably a copolymer mainly composed of isobutylene (isobutene) and partially reacted with normal butene), polyisobutylene having no chemically bondable cross-linking moiety (isobutylene (isobutene) homopolymer), and the like. In addition, in this specification, "having no chemically bondable cross-linking moiety" means that it does not include a site where a cross-link is formed by a chemical bond such as hydrogen bond, covalent bond, chelation between metal ion and polar functional group, and bond formed by the $\sigma$-$\pi$ interaction between metal and unsaturated bond (double and triple bonds). In addition, the plasticizer is preferably at least one selected from the group consisting of process oils, polybutenes having no chemically bondable cross-linking moiety, and polyisobutylenes having no chemically bondable cross-linking moiety.

Examples of the process oils that can be used as a plasticizer include paraffinic oil, naphthenic oil, and aroma oil, and among these, paraffinic oil is more preferable. Further, from the viewpoint of further improving compatibility with styrene block copolymers, $\alpha$-olefin-based polymers, polymers (A), and polymers (B) (among these, especially with styrene block copolymers), the plasticizer more preferably contains paraffinic oil. The paraffinic oil suitable as a plasticizer is not particularly limited, and known paraffinic oils can be appropriately used. For example, it is possible to preferably use ones described in paragraphs [0153] to [0157] of Japanese Unexamined Patent Application Publication No. 2017-57323.

Further, the polybutene that can be used as a plasticizer is not particularly limited as long as it has no chemically bondable cross-linking moiety, but is more preferably a copolymer mainly composed of isobutylene (isobutene) and partially reacted with normal butene (1-butene, 2-butene), from the viewpoint that it is possible to further improve the

fluidity. In addition, as the polybutene as a plasticizer, a commercially available product can be appropriately used. For example, the trade name "Nisseki Polybutene" manufactured by ENEOS Corporation, the trade name "NOF Polybutene Emawet" manufactured by NOF Corporation, the trade name "Oppanol" manufactured by BASF, and the like can be appropriately used.

Further, the polyisobutylene that can be used as a plasticizer is not particularly limited as long as it has no chemically bondable cross-linking moiety. A homopolymer of isobutylene (isobutene) is more preferable from the viewpoint that the hardness can be further lowered and the fluidity can be further improved. In addition, as the polyisobutylene as a plasticizer, commercially available products can be appropriately used, and for example, trade names "Tetrax" and "Himol" manufactured by ENEOS Corporation can be appropriately used.

Moreover, among such plasticizers, paraffinic oil is particularly preferable from the viewpoint of improving compatibility with the polymer. Furthermore, the content of such a plasticizer is preferably 10 to 5000 parts by mass, more preferably 30 to 3000 parts by mass, further preferably 30 to 1000 parts by mass, and most preferably 30 to 500 parts by mass, relative to 100 parts by mass of the polymer ingredient. By setting the content of the plasticizer within this range, it is possible to sufficiently achieve the effects obtained by adding the plasticizer (low hardness and high fluidity) while more efficiently preventing bleeding.

Further, from the viewpoint of preventing bleeding when the plasticizer is used (particularly when oil is used) and the like, the polymer composition of the present invention preferably contains, as the additional ingredient, a styrene block copolymer having no chemically bondable cross-linking moiety. Specifically, the polymer composition of the present invention preferably contains the plasticizer (more preferably at least one selected from the group consisting of the paraffinic oil, the polybutene, and the polyisobutylene) in combination with the styrene block copolymer having no chemically bondable cross-linking moiety.

Further, the polymer composition of the present invention preferably contains the paraffinic oil as the plasticizer in combination with the styrene block copolymer. This makes it possible for the styrene block copolymer to absorb oil, improve the fluidity of the obtained polymer composition to a higher degree while suppressing oil bleeding and the like more sufficiently, and adjust the hardness more efficiently. As the styrene block copolymer having no chemically bondable cross-linking moiety, it is possible to preferably use ones described in paragraphs [0156] to [0163] of Japanese Unexamined Patent Application Publication No. 2017-57393. Note that the "styrene block copolymer" may be any polymer having a styrene block structure at any site.

As the styrene block copolymer having no chemically bonding cross-linking moiety, it is possible to appropriately use known ones (such as SIS, SEPS, SBS, SIBS, SEEPS, and SEBS), and styrene-ethylene-ethylene-propylene-styrene block copolymer (SEEPS) and styrene-ethylenebutylene-styrene block copolymer (SEBS) are more preferable from the viewpoint of high molecular weight, industrial availability, and economy. As the styrene block copolymer, one kind may be used alone, or two or more kinds may be used in combination. As the styrene block copolymer, a commercially available one can be appropriately used. Note that SEBS and SEEPS are more preferable from the viewpoint of further improving oil bleeding resistance when used in combination with the plasticizer (particularly paraffinic oil, polybutene, polyisobutylene). Note that, from the viewpoint of obtaining a lower-hardness polymer composition, the polymer composition of the present invention particularly preferably contains the polymer ingredient, the polybutene and/or the polyisobutylene, and the SEEPS.

In addition, when the polymer composition of the present invention contains the styrene block copolymer having no chemically bonding cross-linking moiety, the content of the styrene block copolymer is preferably 1 to 3000 parts by mass, more preferably 5 to 2000 parts by mass, further preferably 10 to 1000 parts by mass, particularly preferably 30 to 500 parts by mass, and most preferably 50 to 300 parts by mass relative to 100 parts by mass of the polymer ingredient. When the content is the lower limit or higher, the effect of preventing bleeding tends to be higher. Meanwhile, in the case of the upper limit or lower, higher effects tend to be obtained in terms of moldability.

Further, the polymer composition of the present invention may further contain, as the additional component, an α-olefin-based polymer having no chemically bondable cross-linking moiety. The "α-olefin-based polymer" mentioned here refers to a homopolymer of α-olefin and a copolymer of α-olefin, and the "a-olefin" refers to an alkene having a carbon-carbon double bond at the α-position, and examples thereof include ethylene, propylene, 1-butene, 1-pentene, 1-hexene, 1-heptene, 1-octene, 1-nonene, 1-decene, and the like. However, in the present invention, the polybutene and the polyisobutylene are used as plasticizers, so that the term "a-olefin-based polymer" mentioned here refers to ones other than the polybutene and the polyisobutylene. As the α-olefin polymer having no chemically bondable cross-linking moiety, it is possible to preferably use the α-olefin-based resins (but excluding polybutene and polyisobutylene) described in paragraphs [0204] to [0214] of JP 2017-57322 A, for example.

In addition, as the α-olefin-based polymer having no chemically bondable cross-linking moiety, it is possible to preferably use polypropylene (PP), polyethylene (PE, more preferably HDPE), ethylene-propylene copolymer (EPM), ethylene-butene copolymer (EBM), and ethylene-octene copolymer (EOM), for example. In addition, among the above α-olefin-based polymers, it is possible to preferably use an α-olefin-based polymer having a crystallinity of 10% or more (such as PP, PE, EPM, or EBM). Further, as such an α-olefin-based polymer, PP is particularly preferable from the

viewpoint that it has a high melting point and thus allows the composition to have relatively high heat resistance. The method for producing an α-olefin-based polymer having no chemically bonding cross-linking moiety is not particularly limited, and a known method can be appropriately employed. In addition, as such an α-olefin-based polymer, a commercially available product may be used. Note that, as the α-olefin-based polymer having no chemically bonding cross-linking moiety, one kind may be used alone, or two or more kinds may be used in combination.

When an α-olefin-based polymer having no chemically bonding cross-linking moiety is contained in the polymer composition, the content of the α-olefin-based polymer is more preferably 500 parts by mass or less (more preferably 5 to 300 parts by mass, and most preferably 35 to 200 parts by mass) relative to 100 parts by mass of the polymer ingredient. When the content of such an α-olefin-based polymer is within the above range, higher effects tend to be obtained in terms of improving heat resistance and fluidity. Note that from the viewpoint that higher fluidity and higher moldability can be obtained, the α-olefin-based polymer having no chemically bondable cross-linking moiety is preferably contained in the composition in combination with the paraffinic oil and the styrene block copolymer.

In addition, the polymer composition of the present invention preferably contains an anti-aging agent and/or an antioxidant, depending on its use. The anti-aging agent and the antioxidant are not particularly limited, and known ones can be appropriately used. Note that the content of the anti-aging agent and antioxidant is not particularly limited, but is preferably 0.1 to 20% by mass or less (more preferably 0.3 to 10% by mass) relative to the entire polymer composition.

In addition, the polymer composition of the present invention preferably contains a reinforcing agent (filler) as the additional ingredient from the viewpoint of improving the breaking physical properties (breaking strength, elongation at break). The reinforcing agent is not particularly limited, and a known reinforcing agent (which may be a hydrogen-bonding reinforcing agent (filler) or a filler having an amino group introduced therein (hereinafter simply referred to as "amino group-introduced filler" in some cases)) can be appropriately used. As the reinforcing agent, for example, silica, carbon black, clay (which may be organic clay), calcium carbonate (which may be surface-treated), and the like are preferable.

In addition, as the reinforcing agent, clay is more preferable from the viewpoint that the tensile physical properties can be further improved and the bleed resistance can be further improved. Examples of such clay include, but are not limited to, kaolinite, illite, montmorillonite, stevensite, bentonite, and halloysite. In addition, as the clay, it is possible to appropriately use known clay (for example, that described in paragraphs [0146] to [0156] of JP 5918878 B, that described in paragraphs [0146] to [0155] of Japanese Unexamined Patent Application Publication No. 2017-057393, and the like). In addition, among such clays, from the viewpoint of high dispersibility, at least one selected from the group consisting of clays containing silicon and magnesium as main ingredients and organic clays is preferable, and organic clays are particularly preferable. As described above, the polymer composition of the present invention preferably further contains clay, and particularly preferably contains organic clay that is readily peelable as a single layer.

In addition, when the polymer composition of the present invention contains the reinforcing agent (preferably clay, and further preferably organic clay), the content of the reinforcing agent is preferably 20 parts by mass or less, and more preferably 0.01 to 10 parts by mass relative to 100 parts by mass of the polymer ingredient. As the reinforcing agent, one kind may be used alone, or two or more kinds may be used in combination depending on the intended use.

The polymer composition of the present invention preferably has a melt flow rate (MFR) of 10 g/10 min or more, more preferably 30 g/10 min or more, and further preferably 50 g/10 min, at 230°C under a load of 1.2 kg, measured in accordance with Method B described in JIS K6922-2 (issued in 2010). When the MFR is the lower limit or higher, it can be said to have extremely high fluidity, and can exhibit higher processability. It should be noted that such MFR is a value measured in accordance with Method B described in JIS K6922-2 (issued in 2010), and can be measured in the same manner as the method adopted in the Examples section described later.

Furthermore, the polymer composition of the present invention preferably has an MFR of 10 g/10 min or more (more preferably 50 g/10 min or more) and also has a Type A durometer hardness (JIS-A hardness) of 0 to 50 (more preferably 0 to 45, and further preferably 0 to 40), measured at a temperature condition of 20 ± 5°C in accordance with JIS K6253-3:2012. When these conditions are met, it can be said that the composition has extremely high fluidity while maintaining sufficiently low hardness. Note that such Type A durometer hardness (JIS-A hardness) can be easily achieved by including the specific polymer ingredient in the polymer composition (depending on the type of polymer ingredient, it may be achieved by mixing the polymer ingredient with other components). Further, in the present invention, the method for measuring the value of Type A durometer hardness (JIS-A hardness) can be carried out in accordance with the measurement method compliant with JIS K6253-3 issued in 2012 (JIS K6253-3: issued in 2012), with the temperature condition set at 20 ± 5°C, and can be measured in the same manner as the method adopted in the Examples section described later.

Additionally, the polymer composition of the present invention preferably has an MFR of 10 g/10 min or more (more preferably 50 g/10 min or more) and also has a compression set value (unit: %) of 70% or less, more preferably 600 or less, further preferably 50% or less, and particularly preferably 40% or less, after being compressed by 25% using a dedicated jig and left at 70°C for 22 hours, in accordance with JIS K6262 (issued in 2013). When these conditions are met, it can be said that the composition has extremely high fluidity while maintaining sufficiently low compression set. Further, in the present invention, the method for measuring the value of compression set can be carried out in accordance with JIS

K6262 (issued in 2013), and can be measured in the same manner as the method adopted in the Examples section described later.

[Examples]

Hereinafter, the present invention is described in more detail based on Examples and Comparative Examples, but the present invention is not limited to the following Examples.

[Synthesis of Copolymers]

First, the method for synthesizing copolymers used in the following Examples 1 to 5 is described.

(Synthesis Example 1)

A 1L autoclave reactor, whose inlet was connected to a compressor, was used to prepare a copolymer (X1) of ethylene, methyl acrylate, and maleic anhydride as follows. First, a mixed solution of methyl acrylate, maleic anhydride, and 2,6-di-tert-butyl-4-methylphenol (antioxidant) was injected upstream of the compressor, then compressed together with ethylene gas to prepare a monomer mixture containing the antioxidant, and the resulting monomer mixture was then supplied to the autoclave reactor. In preparing such a monomer mixture, the proportions of the ingredients in the monomer mixture supplied to the autoclave reactor (monomer mixture at the reactor inlet) were adjusted to be 69.8% by mass of ethylene, 29% by mass of methyl acrylate, 1.2% by mass of maleic anhydride, and 200 ppm of the antioxidant (Table 1 presents the proportions of the ingredients). Next, di-tert-butyl peroxypivalate was added to the monomer mixture in the autoclave reactor as a free radical initiator, then and radical copolymerization was carried out; subsequently, a high-pressure separator and a low-pressure separator were used to separate the resulting polymer from the produced substances, thereby obtaining copolymer (X1). Note that during such radical copolymerization, the reaction was allowed to proceed under temperature conditions of 200°C and pressure conditions of 1850 atm. Thus, by using the monomer mixture and conducting radical polymerization under the aforementioned conditions, it is clear that the copolymer (X1) is a copolymer having structural units derived from ethylene, structural units derived from methyl acrylate, and structural units derived from maleic anhydride, in the main chain thereof. Note that the amount of methyl acrylate used in the production of copolymer (X1) was set at 100 g.

(Synthesis Examples 2 to 5)

Copolymers (X2) to (X5) were each prepared under the same conditions as Synthesis Example 1, except that the composition of the monomer mixture containing the antioxidant was changed as presented in Table 1.

[Table 1]

| | | | Synthesis Example 1 | Synthesis Example 2 | Synthesis Example 3 | Synthesis Example 4 | Synthesis Example 5 |
|---|---|---|---|---|---|---|---|
| Monomer | Ethylene | (mass%) | 70.1 | 60.5 | 63.4 | 79.5 | 91.6 |
| | Methyl Acrylate | (mass%) | 28.5 | 37.5 | 34.8 | 19.8 | 7.8 |
| | Maleic Anhydride | (mass%) | 1.4 | 2 | 1.8 | 0.7 | 0.6 |
| Antioxidant | BHT*1 | (ppm) | 200 | 200 | 200 | 200 | 200 |
| Conditions for Radical Polymerization | Temperature | (°C) | 200 | 200 | 200 | 200 | 200 |
| | Pressure | (atm) | 1850 | 1850 | 1850 | 1850 | 1850 |
| Abbreviation for Resulting Copolymer | | | Copolymer (X1) | Copolymer (X2) | Copolymer (X3) | Copolymer (X4) | Copolymer (X5) |
| *1: BHT is an abbreviation for "2,6-di-tert-butyl-4-methylphenol" | | | | | | | |

[Regarding Characteristics of Polymer Used in Each Example]

Table 2 shows the characteristics of the raw material polymers used in the following Examples and the like (in the Examples, any of copolymers (X1) to (X5) was used). Note that the "maleation rate" presented in Table 2 is a value obtained by employing [Method for Measuring Maleation Rate] described above (note that in the titration, the automatic potentiometric titrator used was the trade name "AT-710M" manufactured by Kyoto Electronics Manufacturing Co., Ltd., and the ethanol solution of 0.1 mol/L potassium hydroxide used was the trade name "Potassium Hydroxide Solution in Ethanol" manufactured by Merck & Co., Inc. The corrected value (factor) of the ethanol solution of 0.1 mol/L potassium hydroxide used in this manner was 1.00 as confirmed from the test report of the solution.). In addition, the "melting point" presented in Table 2 is a value measured by using 0.01 g of each polymer and using a differential scanning calorimeter (manufactured by Hitachi High-Tech Corporation under the trade name "DSC7000X") at a rate of temperature rise of 10°C/min (value obtained by differential scanning calorimetry (DSC)). The "MA content" listed in Table 2 is a value determined by converting the molar ratio of the integral value of solution NMR using deuterated chloroform as a solvent into a weight ratio.

[Table 2]

| Polymer Type | Abbreviation of Polymer, etc | Melting Point (°C) | Maleation Rate (mass%) | MA Content*1 (mass%) |
|---|---|---|---|---|
| Ethylene-Methyl Acrylate-Maleic Anhydride Copolymer | Copolymer (X1) (Synthesis Example 1) | 58 | 1.2 | 29 |
| | Copolymer (X2) (Synthesis Example 2) | 39 | 1.8 | 38 |
| | Copolymer (X3) (Synthesis Example 3) | 44 | 1.6 | 35 |
| | Copolymer (X4) (Synthesis Example 4) | 75 | 0.6 | 20 |
| | Copolymer (X5) (Synthesis Example 5) | 88 | 0.5 | 8 |
| Maleic Anhydride Graft-modified Polymer (Maleated HOPE) | Polymer (C1) (Trade Name "FUSABOND E265" by DowDuPont) | 131 | 1 | - |
| Maleic Anhydride Graft-modified Polymer (Maleated EOM) | Polymer (C2) (Trade Name "AFFINITY GA 1000R" by DowDuPont) | 67 | 0.8 | - |
| *1: MA content indicates the content of structural units derived from methyl acrylate. | | | | |

[Method for Evaluating Characteristics of Polymer Composition Obtained in Each Example]

Next, a method for evaluating the characteristics of polymer compositions obtained in the following Examples and the like will be described. Note that Table 2 shows the results obtained by each evaluation method.

<Preparation of Measurement Sheet>

The polymer composition obtained in each of the Examples and the like was used to prepare a sheet for use in evaluating the characteristics of the composition as follows. Specifically, first, a pressure press machine with a water cooling function was used, and 43 g of the polymer composition was placed in a mold having a length of 15 cm, a width of 15 cm, and a thickness of 2 mm, and heated (preheated) at 180°C for 3 minutes before pressurization, and then pressurized (heat pressed) under the conditions of temperature: 200°C, working pressure: 20 MPa, and pressurization time: 5 minutes, and then further subjected to a water-cooled press under the conditions of working pressure: 20 MPa and pressurizing time: 2 minutes, and the polymer composition after pressing was taken out of the mold to obtain measurement sheets having a thickness of 2 mm.

<Preparation of Sample (Measurement Sample) for Measuring Compression Set and Hardness>

The measurement sheets obtained as described above were each used to prepare a measurement sample for

use in measuring the compression set and hardness of the composition as follows. Specifically, first, seven disk-shaped sheets, punched out of the measurement sheets into a disk shape having a diameter of 29 mm, were prepared, and then the seven disk-shaped sheets were stacked to a height (thickness) of 12.5 ± 0.5 mm to prepare a measurement sample.

<Measurement of Compression Set (C-Set)>

The compression set (C-Set, unit: %) of the polymer composition obtained in each of the Examples and the like was obtained by using the measurement sample obtained as described above, using the trade name "Vulcanized Rubber Compression Set Test Machine SCM-1008L" manufactured by DUMBBELL CO., LTD. as a compression device, compressing the measurement sample by 25% with a special jig, and measuring under the conditions of 70°C for 22 hours in accordance with JIS K6262 (issued in 2013).

<Measurement of Hardness (JIS-A Hardness)>

The hardness of the polymer composition obtained in each of the Examples and the like was measured as follows using the measurement sample obtained as described above. Specifically, a type A durometer (durometer A hardness tester: trade name "Type A Durometer GSD-719K" manufactured by Teclock) was used to perform hardness measurement on 5 measurement locations (5 measurement points) on the surface of the measurement sample under the temperature condition of 20 ± 5°C, according to JIS K6253-3 (issued in 2012), and the average value of the hardnesses at those measurement points (the average value for the 5 points) was calculated to obtain the JIS-A hardness of the polymer composition obtained in each Example and the like.

<Measurement of MFR>

The MFR (unit: g/10 min) was measured in accordance with Method B described in JIS K6922-2 (issued in 2010) by using the polymer compositions obtained in each of the Examples and the like. Specifically, using the polymer compositions obtained in each of the Examples and the like, a "Melt Indexer G-01" manufactured by Toyo Seiki Seisakusho, Ltd. was employed as the MFR measuring device to add 3 g of the polymer composition to the furnace of the device, and then the temperature was maintained at 230°C for 5 minutes; subsequently, under the conditions of keeping the temperature at 230°C and applying a load of 1.2 kg, and the mass (g) of the polymer composition flowing out per unit time through the opening (opening with a diameter of 1 mm) of a cylindrical orifice member, with a diameter of 1 mm and length of 8 mm, connected to the lower portion of the furnace was measured (the measurement of the mass of the polymer composition flowing out began after maintaining the temperature at 230°C for 5 minutes in the furnace and then starting the load); and the measured mass was converted to the mass (g) of the polymer composition flowing out over 10 minutes.

(Examples 1 to 5 and Comparative Examples 1 and 2)

In each of the Examples 1 to 5 and Comparative Examples 1 to 3, the polymer composition was produced by adjusting the amount of each ingredient used so as to have the compositions presented in Table 3 below and employing the "Step of Producing Polymer Composition" described later. Note that the numerical values of the compositions in Table 3 below are values (parts by mass) obtained by the conversion where the amount of the polymer ingredient used in Examples and the like is set to 100 parts by mass, and in Examples 1 to 5 and Comparative Examples 1 and 2, the amount of the raw material polymer for the polymer ingredient and the amount of the raw material polymer for comparison (hereinafter, these polymers are sometimes simply referred to as "raw material polymer") were both 10 g. Note that regarding Examples 1 to 5, the composition contains a polymer that is a reaction product of any of the copolymers (X1) to (X5) with a cross-linking agent, and it is clear from the types of main chains of the copolymers (X1) to (X5) that such polymer has a glass transition point of 25°C or lower.

<Step of Producing Polymer Composition>

First, a styrene block copolymer (styrene-ethylenebutylene-styrene block copolymer, trade name "GP7533" by LCY Group, hereinafter referred to as "SEBS" as needed) was introduced into a pressurized kneader and mixed at 180°C; during this mixing, paraffinic oil (trade name "300HV-S(J)" manufactured by ENEOS Corporation) was used as a plasticizer and added dropwise to the pressurized kneader, mixing SEBS and paraffinic oil for 1 minute. Subsequently, raw material polymer, polypropylene (trade name "VMD81M" manufactured by SunAllomer Ltd. : hereinafter referred to as "PP" as needed), and an antioxidant (trade name "AO-50" manufactured by ADEKA Corporation) were further added to the pressurized kneader and mixed (kneaded) at 180°C for 2 minutes to plasticize and obtain a mixture. After that, a cross-linking agent, tris(2-hydroxyethyl)isocyanurate (trade name "TANAC P" manufactured by NISSEI CORPORATION), was added to the mixture and mixed (kneaded) at 180°C for 8 minutes to produce the polymer composition.

| | | | Example 1 | Example 2 | Example 3 | Example 4 | Example 5 | Comparative Example 1 | Comparative Example 2 |
|---|---|---|---|---|---|---|---|---|---|
| Composition (Parts by Mass) | Raw Material Polymer for Polymer Ingredient | Copolymer (X1) [Maleic Anhydride Copolymerization Type, Maleation Rate: 1.2] | 100.0 | - | - | - | - | - | - |
| | | Copolymer (X2) [Maleic Anhydride Copolymerization Type, Maleation Rate: 1.8] | - | 100 | - | - | - | - | - |
| | | Copolymer (X3) [Maleic Anhydride Copolymerization Type, Maleation Rate: 1.6] | - | - | 100 | - | - | - | - |
| | | Copolymer (X4) [Maleic Anhydride Copolymerization Type, Maleation Rate: 0.6] | - | - | - | 100 | - | - | - |
| | | Copolymer (X5) [Maleic Anhydride Copolymerization Type, Maleation Rate: 0.5] | - | - | - | - | 100 | - | - |
| | Raw Material Polymer for Comparison | Polymer (C1) [Maleic Anhydride Graft-modified Type, Maleation Rate: 1] | - | - | - | - | - | 100 | - |
| | | Polymer (C2) [Maleic Anhydride Graft-modified Type, Maleation Rate: 0.80] | - | - | - | - | - | - | 100 |
| | Cross-linking Agent | Tris(2-hydroxyethyl)isocyanurate | 1.1 | 1.60 | 1.42 | 0.53 | 0.44 | 0.89 | 0.46 |
| | $\alpha$-Olefin-based Polymer | PP | 60.0 | 60.0 | 60.0 | 60.0 | 60.0 | 60.0 | 60.0 |
| | Styrene Block Copolymer | SEBS | 120.0 | 120 | 120 | 120 | 120 | 120 | 120 |

(continued)

| | | | Example 1 | Example 2 | Example 3 | Example 4 | Example 5 | Comparative Example 1 | Comparative Example 2 |
|---|---|---|---|---|---|---|---|---|---|
| | Plasticizer | Paraffinic Oil | 360.0 | 360.0 | 360.0 | 360.0 | 360.0 | 360.0 | 360.0 |
| | Antioxidant | Commercial Product (Trade Name "AO-50" Manufactured by ADEKA Corporation) | 1.9 | 1.93 | 1.93 | 1.93 | 1.93 | 1.93 | 1.93 |
| | Total Quantity | | 642.99 | 643.53 | 643.35 | 642.46 | 642.37 | 642.81 | 642.39 |
| Characteristics of Composition | JIS-A Hardness | | 23 | 16 | 18 | 32 | 37 | 58 | 41 |
| | Compression Set [Unit: %] [Measurement Conditions: 70°C, 22H, 25%] | | 38 | 34 | 35 | 60 | 58 | 35 | 62 |
| | MFR [Unit: g/10 min] [Measurement Conditions: Temperature 230°C, Load 1.2 Kg] | | 266 | 176 | 173 | 202 | 168 | 0.5 | 5.6 |

As evident from the results presented in Table 3, the polymer compositions obtained in Examples 1 to 5, which include a polymer ingredient obtained by combining copolymers (X1) to (X5) with maleic anhydride introduced into the main chain through copolymerization and a cross-linking agent, all exhibited MFR (unit: g/10 min) values of 10 or more (even values of 50 or more) under a load of 1.2 kg, indicating excellent fluidity and sufficiently high processability. Furthermore, despite having such excellent fluidity, the polymer compositions obtained in Examples 1 to 5 all had JIS-A hardness values of 50 or less and compression set values of 70% or less, confirming that both JIS-A hardness and compression set values were sufficiently low. These results demonstrate that polymer compositions (Examples 1 to 5) containing a polymer ingredient obtained by combining copolymers (X1) to (X5) with maleic anhydride introduced into the main chain through copolymerization and a cross-linking agent can achieve extremely high fluidity while maintaining both hardness and compression set values equal to or less than a certain level (JIS-A hardness: 50 or less, compression set: 70% or less), allowing for a balance of high fluidity, low hardness, and low compression set. Note that among the polymer compositions obtained in Examples 1 to 5, those from Examples 1 to 3 exhibited lower hardness and a compression set of 40% or less (which are even lower values for both hardness and compression set). The present inventors speculate that these results are due to the copolymers (X1) to (X3) used in Examples 1 to 3 having a high content of structural units derived from methyl acrylate, over 25% as presented in Table 2; this high content reduces the crystallinity of the resulting polymer ingredient, thereby achieving greater effects in terms of lower hardness and lower compression set.

Meanwhile, the polymer compositions in Comparative Examples 1 and 2, which utilized polymers with maleic anhydride grafted onto the side chain, had MFR (unit: g/10 min) values of 5.6 or less (values less than 10) under a load of 1.2 kg, showing insufficient fluidity compared to the polymer compositions obtained in Examples 1 to 5. Additionally, the polymer composition obtained in Comparative Example 1 had a JIS-A hardness of 58, which was not sufficient in terms of hardness. Note that generally, in the field of polymer compositions, it is common to think that fluidity decreases when maleic anhydride is introduced into the main chain through copolymerization, due to the reduced reactivity of the maleic anhydride part. However, as demonstrated in the Examples and Comparative Examples (as presented in Table 3), using polymers copolymerized with maleic anhydride (Examples 1 to 5) surprisingly showed lower hardness, lower compression set, and extremely high fluidity compared to using maleic anhydride-modified polymers with graft-modified maleic anhydride (Comparative Examples 1 and 2), although the mechanism is unclear.

These results indicate that polymer compositions containing a reaction product of a copolymer (X) that has a structural unit (I) derived from an olefin and a structural unit (II) derived from maleic anhydride in a main chain and has a maleation rate of 0.1% by mass or more and 2.7% by mass or less with a cross-linking agent as a polymer ingredient can achieve extremely high fluidity while maintaining both hardness and compression set values at lower levels compared to polymer compositions utilizing graft-modified maleated polymers (such as maleated EOM and maleated HDPE).

[Industrial Applicability]

As described above, the present invention makes it possible to provide a polymer composition that can achieve sufficiently low values of the hardness and compression set while achieving an extremely high fluidity, and can achieve three characteristics of high fluidity, low hardness, and low compression set in a well-balanced manner. Thus, the polymer composition of the present invention, being highly processable and also flexible due to its low hardness, is particularly useful for applications requiring a soft touch felt by humans, such as casings and protective gear for machinery and electrical appliances, interior materials for housing and automobiles, skin for humanoid robots (androids and humanoids), toys, and more.

## Claims

1. A polymer composition comprising:

    at least one polymer ingredient selected from the group consisting of a polymer (A) having a side chain (a) containing a hydrogen-bonding cross-linking moiety with a carbonyl-containing group and/or a nitrogen-containing heterocycle and having a glass transition point of 25°C or lower, and a polymer (B) containing a hydrogen-bonding cross-linking moiety and a covalent-bonding cross-linking moiety in a side chain and having a glass transition point of 25°C or lower, wherein
    both the polymer (A) and the polymer (B) are a reaction product of a copolymer (X) that has a structural unit (I) derived from an olefin and a structural unit (II) derived from maleic anhydride in a main chain and has a maleation rate of 0.1% by mass or more and 2.7% by mass or less with a cross-linking agent.

2. The polymer composition according to claim 1, wherein the copolymer (X) further includes a structural unit (III) derived from a (meth)acrylic ester in the main chain.

3. The polymer composition according to claim 2, wherein a content of the structural unit (III) in the copolymer (X) is 1% by mass or more and 50% by mass or less.

4. The polymer composition according to claim 2, wherein a content of the structural unit (III) in the copolymer (X) is 25% by mass or more and 40% by mass or less.

5. The polymer composition according to claim 2, wherein the structural unit (III) includes a structural unit (III-MA) derived from methyl (meth)acrylate.

6. The polymer composition according to claim 1, wherein the copolymer (X) is a polymer having a melting point of 120°C or lower.

7. The polymer composition according to claim 1, wherein the cross-linking agent is a compound having at least one of a hydroxyl group, an amino group, an imino group, and a thiol group.

8. The polymer composition according to claim 1, further comprising: a styrene block copolymer having no chemically bondable cross-linking moiety.

9. The polymer composition according to claim 1, further comprising: at least one plasticizer selected from the group consisting of process oils, polybutenes having no chemically bondable cross-linking moiety, and polyisobutylenes having no chemically bondable cross-linking moiety.

**INTERNATIONAL SEARCH REPORT**

International application No.
**PCT/JP2022/048503**

**A. CLASSIFICATION OF SUBJECT MATTER**

***C08L 23/08***(2006.01)i; ***C08K 5/053***(2006.01)i; ***C08K 5/17***(2006.01)i; ***C08K 5/37***(2006.01)i; ***C08L 25/08***(2006.01)i; ***C08L 35/00***(2006.01)i; ***C08L 35/02***(2006.01)i
FI: C08L23/08; C08K5/053; C08K5/17; C08K5/37; C08L25/08; C08L35/00; C08L35/02

According to International Patent Classification (IPC) or to both national classification and IPC

**B. FIELDS SEARCHED**

Minimum documentation searched (classification system followed by classification symbols)

C08L23/08; C08K5/053; C08K5/17; C08K5/37; C08L25/08; C08L35/00; C08L35/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2017/188270 A1 (JXTG NIPPON OIL & ENERGY CORP.) 02 November 2017 (2017-11-02) claims, example 4 | 1-9 |
| X | JP 2020-152812 A (NIPPON POLYETHYLENE K.K.) 24 September 2020 (2020-09-24) claims, paragraph [0006], example 2 | 1-3, 5-7 |
| Y | | 8–9 |
| A | | 4 |
| X | JP 2002-241555 A (MITSUBISHI CHEMICAL CORP.) 28 August 2002 (2002-08-28) claims, examples 1, 2 | 1-3, 5-7 |
| A | | 4, 8-9 |
| X | JP 9-187892 A (JAPAN POLYOLEFINS CO., LTD.) 22 July 1997 (1997-07-22) claims, examples (compositions 3, 7) | 1-3, 5-7 |
| A | | 4, 8-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 March 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/048503**

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 8-302091 A (SHOWA DENKO K.K.) 19 November 1996 (1996-11-19)<br>claims, reference examples 2-4, 6 | 1-7<br><br>8–9 |
| Y<br><br>A | JP 2021-172765 A (ENEOS CORP.) 01 November 2021 (2021-11-01)<br>paragraphs [0066], [0074], [0075] | 8-9<br><br>1–7 |
| A | JP 2019-137718 A (NIPPON POLYETHYLENE K.K.) 22 August 2019 (2019-08-22)<br>paragraph [0077] | 1-9 |
| A | WO 2017/138399 A1 (TOYOBO CO., LTD.) 17 August 2017 (2017-08-17)<br>Paragraph [0022] | 1-9 |
| A | WO 2020/027109 A1 (JXTG NIPPON OIL & ENERGY CORP.) 06 February 2020 (2020-02-06)<br>entire text | 1-9 |

Form PCT/ISA/210 (second sheet) (January 2015)

**INTERNATIONAL SEARCH REPORT**
**Information on patent family members**

International application No.
**PCT/JP2022/048503**

| Patent document cited in search report | Publication date (day/month/year) | Patent family member(s) | Publication date (day/month/year) |
|---|---|---|---|
| WO 2017/188270 A1 | 02 November 2017 | US 2019/0136052 A1<br>claims, example 4<br>EP 3450506 A1<br>CN 109071956 A | |
| JP 2020-152812 A | 24 September 2020 | (Family: none) | |
| JP 2002-241555 A | 28 August 2002 | (Family: none) | |
| JP 9-187892 A | 22 July 1997 | (Family: none) | |
| JP 8-302091 A | 19 November 1996 | (Family: none) | |
| JP 2021-172765 A | 01 November 2021 | (Family: none) | |
| JP 2019-137718 A | 22 August 2019 | (Family: none) | |
| WO 2017/138399 A1 | 17 August 2017 | US 2019/0048235 A1<br>paragraph [0026]<br>EP 3415581 A1<br>CN 108699412 A<br>KR 10-2018-0107244 A | |
| WO 2020/027109 A1 | 06 February 2020 | US 2021/0371635 A1<br>entire text<br>EP 3831857 A1<br>CN 112424238 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020027109 A
- JP 2021172765 A
- JP 5918878 B
- JP 2017206604 A
- JP HEI1156309 A
- JP HEI3163109 A
- JP SHO6147711 A
- JP 1156309 A
- JP 2017057322 A
- JP 2017057323 A
- JP 2017057393 A